# EUROPÄISCHE PATENTANMELDUNG

(11) **EP 1 722 539 A2**
(43) Veröffentlichungstag der Anmeldung: **15.11.2006**
(21) Anmeldenummer: 06009508.0
(22) Anmeldetag: 09.05.2006
(51) Int. Cl.: H04M 1/60, G01C 21/28

(54) **Freisprecheinrichtung für ein Mobiltelefon**

(30) Priorität: 12.05.2005 DE 102005022784
(71) Anmelder: Bury GmbH & Co. KG, 32584 Löhne (DE)
(72) Erfinder: Piekarz, Roman, 39-300 Mielec (PL)

(57) **Zusammenfassung**

Eine Freisprecheinrichtung für ein Mobiltelefon, das eine Telefon-Sende- und -Empfangseinheit für ein Mobilfunknetz und darüber hinaus eine Kommunikationseinrichtung zur drahtlosen Übertragung von Audio- und Datensignalen aufweist, mit einem Gehäuse (1), in dem sich eine mit der Kommunikationseinrichtung des Mobiltelefons eine drahtlose Kommunikationsverbindung bildende Kommunikationseinrichtung und eine Elektronik zur Aufnahme, Umsetzung und Weiterleitung und zur Wiedergabe von Audiosignalen befindet, ermöglicht den Betrieb mit einem Mobiltelefon ohne oder zumindest ohne voluminöse Festinstallationen in einem Kraftfahrzeug dadurch, dass das Gehäuse (1) mit einem Display (6) versehen ist, das zur Wiedergabe von drahtlos vom Mobiltelefon übermittelten Daten ansteuerbar ist, das aus dem Gehäuse (1) ein die Verbindung zu einer Stromversorgung herstellendes Kabel (4, 4') herausgeführt ist und dass eine Bedieneinheit (15, 32) zur Bedienung des Mobiltelefons über die drahtlose Kommunikationsverbindung vorgesehen ist.

## Beschreibung

Die Erfindung betrifft eine Freisprecheinrichtung für ein Mobiltelefon, das eine Telefon-Sende- und -Empfangseinheit für ein Mobilfunknetz und darüber hinaus eine Kommunikationseinrichtung zur drahtlosen Übertragung von Audio- und Datensignalen aufweist, mit einem Gehäuse, in dem sich eine mit der Kommunikationseinrichtung des Mobiltelefons eine drahtlose Kommunikationsverbindung bildende Kommunikationseinrichtung und eine Elektronik zur Aufnahme, Umsetzung und Weiterleitung und zur Wiedergabe von Audiosignalen befindet.

Derartige Freisprecheinrichtungen sind bekannt. Sie weisen einen Halter auf, in den das Mobiltelefon einsetzbar ist. Die drahtlosen kommunikationseinrichtungen sind nach einem Standard ausgebildet, nämlich nach dem Bluetooth-Standard. Der Halter ist dabei regelmäßig mit einer im Fahrzeug installierten Steuerungsbox verbunden, über die vom Mobiltelefon übertragene Audiosignale an beispielsweise einen Lautsprecher weitergeleitet werden. Umgekehrt können von einem Mikrofon aufgenommene Audiosignale auf das Telefon übertragen und vom Telefon über die Telefon-Sendeeinheit ausgestrahlt werden. An diesem bekannten System ist nachteilig, dass ein nicht unerheblicher Platzbedarf für die fest installierten Teile der Freisprecheinrichtung besteht, der in Kraftfahrzeugen nicht immer zur Verfügung steht.

Der vorliegenden Erfindung liegt daher die Aufgabe zugrunde, eine Freisprecheinrichtung der eingangs erwähnten Art so auszubilden, dass keine oder nur noch kleinvolumige Teile fest verbaut werden müssen.

Zur Lösung dieser Aufgabe ist erfindungsgemäß eine Freisprecheiririchtung der eingangs erwähnten Art dadurch gekennzeichnet, dass das Gehäuse mit einem Display versehen ist, das zur Wiedergabe von drahtlos vom Mobiltelefon übermittelten Daten ansteuerbar ist, dass aus dem Gehäuse ein die Verbindung zu einer Stromversorgung herstellendes Kabel herausgeführt ist und dass eine Bedieneinheit zur Bedienung des Mobiltelefons über die drahtlose Kommunikationsverbindung vorgesehen ist.

Die erfindungsgemäße Freisprecheinrichtung lässt sich somit in einem einzigen Gehäuse unterbringen, das mit einem Display versehen ist und somit eine komfortable Bedienung ermöglicht. Das Gehäuse ist, vorzugsweise mittels eines Steckerfußes, im Fahrgastraum eines Kraftfahrzeuges unproblematisch montierbar, sinnvollerweise im Sichtfeld des Fahrers an einer Stelle, an der keine Störung der Verkehrswahrnehmung zu befürchten ist. Die Stromversorgung der Freisprecheinrichtung erfolgt über das aus dem Gehäuse herausgeführte Kabel, und zwar in einfachster Weise durch Einstecken in einen Zigarettenanzünderkontakt, wodurch das Kabel über eine gewisse Länge im Passagierraum verlegt werden muss.

Alternativ dazu kann an das Kabel eine fest (und verdeckt) im Fahrzeug installierte Anschlussbox angeschlossen sein, an die eine Versorgungsspannung und etwaige installierte Lautsprecher und/oder Mikrofone anschließbar sind. Die Anschlussbox benötigt außerordentlich wenig Einbauraum, der immer in geeigneter Weise zur Verfügung steht. In dieser Ausführungsform kann das Kabel vom Gehäuse aus auf kurzem Wege verdeckt, beispielsweise hinter dem Armaturenbrett, verlegt werden.

In einer bevorzugten Ausführungsform der Erfindung ist das Gehäuse zweiteilig ausgebildet und besteht aus einem fest montierbaren Steckerfuß und einem damit rastend verbindbaren Displayteil.

Wenn das Gehäuse wenigstens einen eingebauten Lautsprecher, vorzugsweise jedoch für eine Wiedergabe in Stereoqualität wenigstens zwei eingebaute Lautsprecher, aufweist, ist der Anschluss an einen externen Lautsprecher entbehrlich, sodass die Freisprecheinrichtung nicht auf im Fahrzeug eingebaute Lautsprecher zurückgreifen muss. Wird jedoch, beispielsweise über die Anschlussbox, eine Verbindung zu einem externen Lautsprecher hergestellt, werden die in das Gehäuse eingebauten Lautsprecher abgeschaltet. Die Lautsprecher befinden sich zweckmäßigerweise im Displayteil des zweiteilig ausgebildeten Gehäuses.

Es ist vorteilhaft, eine nachträglich eingebaute Freispreeheinrichtung mit einem geeignet positionierbaren Mikrofon zu verwenden. Demzufolge ist es zweckmäßig, wenn das Gehäuse mit einer Anschlussbuchse für ein externes Mikrofon versehen ist. Auch diese Anschlussbuchse ist bei einem zweiteilig ausgebildeten Gehäuse vorzugsweise im Displayteil untergebracht. Alternativ hierzu kann ein Mikrofon auch in das Gehäuse selbst eingebaut sein.

Hingegen wird die Stromversorgung, also das von dem Gehäuse wegführende Kabel, bei dem zweiteiligen Gehäuse aus dem Steckerfuß herausgeführt.

Die erfindungsgemäße Freisprecheinrichtung kann mit ihrem Display zweckmäßigerweise auch für die Unterstützung des Fahrers bei seiner Routenwahl verwendet werden. Ohne großen zusätzlichen Aufwand kann das Gehäuse mit einer Verkehrsfunknachrichten empfangenden Antenne und einer die Verkehrsfunknachrichten decodierenden Auswertungsschaltung versehen sein, wobei die Antenne zweckmäßigerweise im Steckerfuß des zweiteilig ausgeführten Gehäuses untergebracht ist.

Die Bedieneinheit der Freisprecheinrichtung ist vorzugsweise auf einer Oberseite des Displayteils angeordnet. Ergänzend oder alternativ hierzu kann die Bedieneinheit mit Vorteil auch als drahtlose Fernbedienung ausgebildet sein, die an geeigneter Stelle, beispielsweise am Lenkrad nachträglich befestigt werden und als Infrarot- oder Funkfernbedienung ausgeführt sein kann. Insbesondere mit einer derartigen Bedieneinheit können über die Freisprecheinrichtung auch Wählsignale mittels der drahtlosen Kommunkationsverbindung auf das Mobiltelefon übertragen werden. Der Wählvorgang kann somit durch den Fahrer beispielsweise am Lenkrad selbst veranlasst werden, sodass die mit einem Wählvorgang verbundene Ablenkung vom Verkehrsgeschehen minimal gehalten werden kann.

Die Erfindung soll im Folgenden anhand von in der Zeichnung dargestellten Ausführungsbeispielen näher erläutert werden. Es zeigen:
- Figur 1 -: eine schematische Darstellung einer Freisprecheinrichtung gemäß einer ersten Ausführungsform der Erfindung mit einem Anschlusskabel zur Stromversorgung,
- Figur 2 -: zwei Teile des Gehäuses der Freisprecheinrichtung gemäß Figur 1 in voneinander getrennter Form,
- Figur 3 -: eine schematische Darstellung einer Freisprecheinrichtung gemäß einer zweiten Ausführungsform der Erfindung,
- Figur 4 -: die Freisprecheinrichtung gemäß Figur 3 mit voneinander getrennten Teilen des Gehäuses.

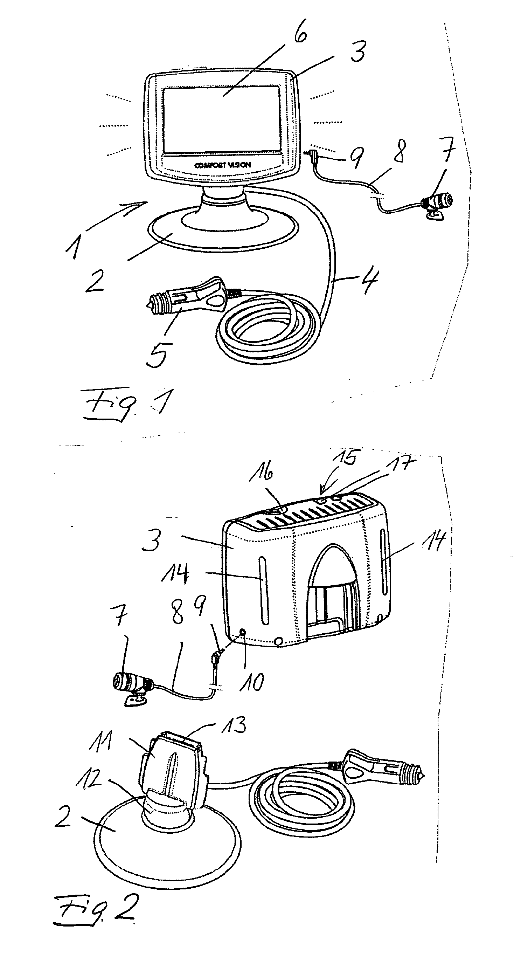

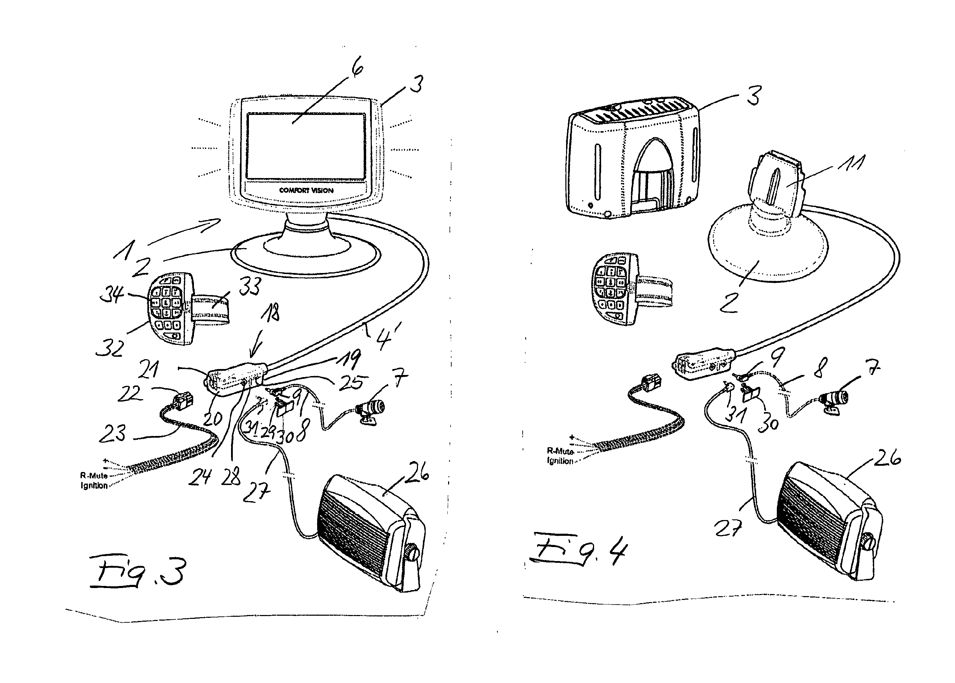

Die in den Figuren 1 und 2 dargestellte Freisprecheinrichtung weist ein Gehäuse 1 auf, das aus einem Steckerfuß 2 und einem Displayteil 3 gebildet ist. Aus dem Steckerfuß 2 des Gehäuses 1 ist ein Kabel 4 herausgeführt, das als Stromversorgungskabel dient und daher an seinem Ende einen Stecker 5 aufweist, der mit einem Zigarettenanzünder-Steckkontakt eines Kraftfahrzeugs kontaktierbar ist, um so die Bordspannung des Kraftfahrzeugs der Freisprecheinrichtung zuzuleiten.

Das Displayteil 3 des Gehäuses 1 weist an seiner Vorderseite ein Display 6 zur Darstellung von Telefondaten, beispielsweise der Nummer eines angewählten Teilnehmers oder eines Anrufers auf. An das Displayteil 3 ist ein externes Mikrofon 7 anschließbar, das mit einem Verbindungskabel 8 und einem üblichen Anschlussstecker 9 mit einer seitlich am Displayteil 3 des Gehäuses 1 angebrachten Mikrofonbuchse 10 an die Freisprecheinrichtung anschließbar ist.

Figur 2 verdeutlich, dass das Displayteil 3 auf den Steckerfuß 2 aufsteckbar ist. Hierzu weist der Steckerfuß 2 einen Flachstecker 11 auf, der an dem Steckerfuß 2 mittels eines Kugelgelenks 12 befestigt ist. Der Flachstecker 11 ist mit von oben zugänglichen Steckkontakten 13 versehen, mit denen die elektrische Verbindung zu dem Displayteil 3 herstellbar ist, wenn das Displayteil 3 von oben nach unten auf den Flachstecker 11 aufgeschoben wird, um eine rastende Verbindung des Displayteils 3 mit dem Steckerfuß 2 herzustellen.

In dem Displayteil 3 befindet sich eine Kommunikationseinrichtung, die mit einem Mobiltelefon mit einer entsprechenden Kommunikationseinrichtung eine drahtlose Kommunikationsverbindung nach dem Bluetooth-Standard herstellen und aufrechterhalten kann. Auf diese Weise gelangen die Telefondaten des Mobiltelefons in die Freisprecheinrichtung und sind auf dem Display 6 darstellbar.

Das Displayteil 3 weist an seiner Rückseite/an seinen Seitenwänden zwei eingebaute Lautsprecher auf, die den Schall durch zugehörige Austrittsschlitze 14 abstrahlen. In Figur 1 ist die Schallabstrahlung in Stereoqualität nach beiden Seiten des Displayteils 3 durch punktierte Linien symbolisiert. Mit dem angeschlossenen Mikrofon 7 können somit die Freisprechfunktionen der Freisprecheinrichtung ausgeführt werden, ohne dass eine weitere Verbindung zum Mobiltelefon besteht.

Die Durchführung eines Telefongesprächs erfolgt über die Sende- und Empfangseinrichtung des Mobiltelefons, das lediglich die Bluetooth-Kommunkationsverbindung mit der Freisprecheinrichtung aufrechterhalten muss und daher keinen festgelegten Standort hat. Das Mobiltelefon kann beispielsweise für die Annahme eines Telefongesprächs in einer Jackentasche des Fahrers des Kraftfahrzeugs verbleiben.

Um die Telefonfunktionen zu steuern, ist das Gehäuse 1 mit einer Bedieneinrichtung 15 versehen, die aus einer Ein/Aus-Taste 16 und zwei Tasten 17 besteht, mit denen die Annahme und das Beenden von Telefongesprächen, die Regulierung der Lautsprecher und das "Pairen" der Bluetooth-Kommunkationseinrichtungen gesteuert werden. Das "Pairen" dient der Abstimmung des Kommunikationsprotokolls nach dem Bluetooth-Standard und der Einstellung der beiden Kommunikationseinrichtungen aufeinander zur Herstellung der drahtlosen Kommunkationsverbindung.

Bei dem in den Figuren 3 und 4 dargestellten zweiten Ausführungsbeispiel der Erfindung ist das Gehäuse 1 praktisch identisch aufgebaut. Lediglich das Kabel 4', das aus dem Steckerfuß 2 herausgeführt ist, endet in einer Anschlussbox 18, und ist in eine erste kleine Stirnseite 19 der Anschlussbox 18 hineingeführt. Die gegenüberliegende Stirnseite 20 der Anschlussbox 18 weist eine Steckerbuchse 21 zur Kontaktierung mit einem Stecker 22 eines Steuerkabels 23 auf. Das Steuerkabel 23 führt eine Versorgungsspannung +,- sowie Steuersignale für die Stummschaltung eines Autoradios (R-Mute) vom Telefon und eines den Zustand der Zündung charakterisierenden Signals (Ignition) von der Standardklemme 15 der Autoelektronik. Durch das vom Mobiltelefon über die drahtlose Kommunikationsverbindung auf die Freisprecheinrichtung übermittelte Signal eines ankommenden Anrufs wird somit von der Freisprecheinrichtung über das Steuerkabel 23 das im Kraftfahrzeug befindliche Autoradio stummgeschaltet, um das Telefonat nicht zu stören. In entsprechender Weise wird das den Zustand der Zündung charakterisierende Signal "Ignition" zum Ein- bzw. Ausschalten der Freisprecheinrichtung verwendet.

In dieser Ausführungsform ist an entsprechende Buchsen 24, 25 in einer Mantelwand der zylindrischen Anschlussbox 18 ein Lautsprecher 26 und/oder das externe Mikrofon 7 mittels eines Lautsprecherkabels 27 oder des Mikrofonkabels 8 anschließbar. Zwischen den Anschlussbuchsen 24, 25 weist die Anschlussbox 18 eine Rastaufnahme 28 auf, in die Raststege 29 einer Abdeckblende 30 einrastbar sind. Die Abdeckblende 30 kann dabei zur Sicherung des am Ende des Lautsprecherkabels 27 angebrachten Steckers 31 und/oder des Steckers 9 des Mikrofonkabels 8 dienen.

Das Displayteil 3 ist in dieser Ausführungsform mit einem (nicht dargestellten) Fembedienungsempfänger in Form eines Infrarot- oder Funkempfängers ausgestattet, sodass die Bedienung der Freisprecheinrichtung über eine Fernbedienung 32 erfolgen kann, die mit einem verstellbaren Befestigungsband 33 am Lenkrad des Kraftfahrzeugs befestigbar ist. Die Fernbedienung kann insbesondere ein Tastenwählfeld 34 aufweisen, um über die Freisprecheinrichtung und die drahtlose Kommunikationsverbindung mit dem Mobiltelefon einen Wählvorgang des Mobiltelefons zu steuern.

Die erfindungsgemäße Freisprecheinrichtung ermöglicht somit die Freisprechfunktion für ein Mobiltelefon, das mit den eigenen Telefon-Sende- und -Empfangseinheiten die Telefonverbindung über das Mobilfunknetz herstellt und aufrechterhält. Lediglich die Audiodaten und bestimmte Steuerungsfunktionen werden über die drahtlose Kommunikationsverbindung auf die Freisprecheinrichtung übertragen, sodass mit dem Mikrofon 7 und dem Lautsprecher 26 bzw. den eingebauten Lautsprecher 14 die Freisprechfunktion ausgeführt werden kann und bestimmte Daten, wie beispielsweise die Telefonnummer des Gesprächsteilnehmers, auf dem Display 6 dargestellt werden.

## Patentansprüche

1. Freisprecheinrichtung für ein Mobiltelefon, das eine Telefon-Sende- und -Empfangseinheit für ein Mobilfunknetz und darüber hinaus eine Kommunikationseinrichtung zur drahtlosen Übertragung von Audio- und Datensignalen aufweist, mit einem Gehäuse (1), in dem sich eine mit der Kommunikationseinrichtung des Mobiltelefons eine drahtlose Kommunikationsverbindung bildende Kommunikationseinrichtung und eine Elektronik zur Aufnahme, Umsetzung und Weiterleitung und zur Wiedergabe von Audiosignalen befindet, **dadurch gekennzeichnet, dass** das Gehäuse (1) mit einem Display (6) versehen ist, das zur Wiedergabe von drahtlos vom Mobiltelefon übermittelten Daten ansteuerbar ist, dass aus dem Gehäuse (1) ein die Verbindung zu einer Stromversorgung herstellendes Kabel (4, 4') herausgeführt ist und dass eine Bedieneinheit (15, 32) zur Bedienung des Mobiltelefons über die drahtlose Kommunikationsverbindung vorgesehen ist.

2. Freisprecheinrichtung nach Anspruch 1, **dadurch gekennzeichnet, dass** das Gehäuse (1) zweiteilig ausgebildet ist und aus einem fest montierten Steckerfuß (2) und einem damit rastend verbindbaren Displayteil (3) besteht.

3. Freisprecheinrichtung nach Anspruch 1 oder 2, **dadurch gekennzeichnet, dass** das Gehäuse (1) wenigstens einen eingebauten Lautsprecher aufweist.

4. Freisprecheinrichtung nach Anspruch 2 und 3, **dadurch gekennzeichnet, dass** der wenigstens eine Lautsprecher in das Displayteil (3) des Gehäuses (1) eingebaut ist.

5. Freisprecheinrichtung nach einem der Ansprüche 1 bis 4, **dadurch gekennzeichnet, dass** das Gehäuse (1) mit einer Anschlussbuchse (10) für ein externes Mikrofon (7) versehen ist.

6. Freisprecheinrichtung nach Anspruch 2 und 5; **dadurch gekennzeichnet, dass** die Anschlussbuchse (10) am Displayteil (3) angeordnet ist.

7. Freisprecheinrichtung nach einem der Ansprüche 1 bis 6, **dadurch gekennzeichnet, dass** das aus dem Gehäuse (1) herausgeführte Kabel (4) mit einem Stecker (5) zur Kontaktierung eines Zigarettenanzünders versehen ist.

8. Freisprecheinrichtung nach einem der Ansprüche 1 bis 6, **dadurch gekennzeichnet, dass** das aus dem Gehäuse (1) herausgeführte Kabel (4') mit einer fest installierten Anschlussbox (18) verbunden ist, an die eine Versorgungsspannung (+, -) und etwaige installierte Lautsprecher (26) und Mikrofon (7) anschließbar sind.

9. Freisprecheinrichtung nach Anspruch 2 und Anspruch 7 oder 8, **dadurch gekennzeichnet, dass** das Kabel (4, 4') mit dem Steckerfuß (2) verbunden ist.

10. Freisprecheinrichtung nach einem der Ansprüche 1 bis 9, **dadurch gekennzeichnet, dass** in das Gehäuse (1) eine Verkehrsfunknachrichten empfangende Antenne und eine die Verkehrsfunknachrichten decodierende Auswertungsschaltung angeordnet sind.

11. Freisprecheinrichtung nach Anspruch 2 und 10, **dadurch gekennzeichnet, dass** die Antenne im Steckerfuß (2) des Gehäuses (1) angeordnet ist.

12. Freisprecheinrichtung nach einem der Ansprüche 2 bis 11, **dadurch gekennzeichnet, dass** die Bedieneinheit (15) auf einer Oberseite des Displayteils (3) angeordnet ist.

13. Freisprecheinrichtung nach einem der Ansprüche 1 bis 12, **dadurch gekennzeichnet, dass** die Bedieneinheit als drahtlose Fernbedienung (32) ausgebildet ist.
